# EUROPÄISCHE PATENTSCHRIFT

(11) **EP 2 221 134 B1**
(45) Veröffentlichungstag und Bekanntmachung des Hinweises auf die Patenterteilung: **08.08.2012**
(21) Anmeldenummer: 09153185.5
(22) Anmeldetag: 19.02.2009
(51) Int. Cl.: B23D 45/18, B23D 47/04, B23C 3/12

(54) **Bearbeitungsvorrichtung**
Processing device
Dispositif de traitement

(43) Veröffentlichungstag der Anmeldung: 25.08.2010
(73) Patentinhaber: Brandt Kantentechnik GmbH, 32647 Lemgo (DE)
(72) Erfinder: Teubner, Bernd, 32049 Herford (DE)
(74) Vertreter: HOFFMANN EITLE

(56) Entgegenhaltungen:
- EP-A- 0 538 513
- EP-A- 1 023 954
- WO-A-97/34744
- DE-A1-102007 028 417
- US-A1- 2006 037 450

## Beschreibung

Die vorliegende Erfindung betrifft eine Bearbeitungsvorrichtung, beispielsweise eine Kantenbearbeitungsvorrichtung, zum Bearbeiten von Werkstücken, die bevorzugt zumindest abschnittsweise aus Holz, Holzwerkstoffen, Kunststoff, Metall oder dergleichen bestehen.

### Stand der Technik

Bearbeitungsvorrichtungen und Kantenbearbeitungsvorrichtungen der eingangs genannten Art werden beispielsweise im Bereich der Möbelindustrie eingesetzt, um unter anderem Überstände angeleimter Kanten bündig zu der Oberfläche des Werkstücks fräsen zu können. Mit derartigen Bearbeitungsvorrichtungen ist darüber hinaus eine Vielzahl von Bearbeitungsverfahren durchführbar, je nach Konfiguration der jeweiligen Maschine.

So sind der Anmelderin beispielsweise Kantenbearbeitungsvorrichtungen bekannt, die einen Werkstückeinlauf, eine Fördereinrichtung und eine oder mehrere Bearbeitungseinrichtungen aufweisen. Der Werkstückeinlauf umfasst eine Einlaufsperre, um einen minimalen Werkstückabstand vor Beginn der Bearbeitung einzustellen. Als Bearbeitungsaggregate können beispielsweise verschiedenartige Aggregate zum Bearbeiten von Oberflächen, wie zum Beispiel Aggregate zum Fräsen von Oberflächen, Schleifaggregate, Ziehaggregate oder Polieraggregate in einer Maschine kombiniert werden. Ebenfalls bekannt ist ein sogenanntes Kappaggregat. Zur Beschickung einer solchen Kantenbearbeitungsvorrichtung kann am Werkstückeinlauf ein automatisches Beschickungssystem vorgesehen sein; alternativ wird eine solche Maschine auch manuell beschickt.

Allerdings weisen bekannte Bearbeitungsvorrichtungen und auch Kantenbearbeitungsvorrichtungen den Nachteil auf, dass der Werkstückeinlauf zwar das Zuführen der Werkstücke steuert, die Zuführung jedoch zu Beginn des Betriebes der Kantenbearbeitungsvorrichtung voreingestellt wird. Somit kann während der Bearbeitung von Werkstücken eine unnötig große Werkstücklücke zwischen einzelnen Werkstücken entstehen, was sich wiederum nachteilig auf den Durchsatz der Maschine auswirkt.

Ferner offenbart die WO 97/43744 eine Bearbeitungsvorrichtung, die die Bearbeitung des Werkstücks anhand einer Bahnkurve durchführt, die nach dem Scannen des Werkstücks generiert wird. Die Oberbegriffe der Ansprüche 1 und 8 basieren auf diesem Dokument.

Die EP 1 023 954 A1 offenbart eine Vorrichtung zum Bearbeiten von Metallplatten, wobei die Vorrichtung mit einer Speichereinheit versehen ist, die die Metallplatten vor und nach der Bearbeitung speichert.

### Inhalt der Erfindung

Ziel der Erfindung ist es, die oben genannten Probleme zu lösen und eine Bearbeitungsvorrichtung bereitzustellen, die einen erhöhten Werkstückdurchsatz aufweist, ohne bei der Lösung des Problems einen wesentlichen mechanischen Mehraufwand zu betreiben, um die genannten Ziele zu erreichen.

Das Ziel der vorliegenden Erfindung wird durch den Gegenstand von Anspruch 1, sowie ein Verfahren gemäß Anspruch 8 erreicht. Weitere bevorzugte Ausführungsformen finden sich in den abhängigen Ansprüchen.

Grundgedanke der vorliegenden Erfindung ist es, eine Bearbeitungsvorrichtung bereitzustellen, die zur Erhöhung des Werkstückdurchsatzes zumindest die Werkstücklücke zwischen zwei zu bearbeitenden Werkstücken minimiert, indem einer Steuereinrichtung Informationen zu Betriebsparametern und der Werkstückdicke eines Werkstücks zur Verfügung gestellt werden, und die Steuereinrichtung aus diesen Informationen den Werkstückeinlauf gezielt steuert.

Zur Lösung der beschriebenen Aufgabe wird erfindungsgemäß eine Bearbeitungsvorrichtung, wie beispielsweise eine _{K}antenbearbeitungsvorrichtung, bereitgestellt, die umfasst: eine Fördereinrichtung zum Fördern der Werkstücke in einer Durchlaufrichtung, eine Bearbeitungseinrichtung zum Bearbeiten der Werkstücke zumindest im Bereich der Kante, einen Werkstückeinlauf, der an einem stromaufwärts gelegenen Ende der Fördereinrichtung angeordnet ist und das Zuführen der Werkstücke zur Fördereinrichtung steuert, und eine elektronische Steuereinrichtung, die betrieblich mit der Fördereinrichtung, der Bearbeitungseinrichtung und dem Werkstückeinlauf in Verbindung steht, um deren Betrieb zu steuern. Im Besonderen zeichnet sich die Bearbeitungsvorrichtung der vorliegenden Erfindung dadurch aus, dass in der Steuereinrichtung Informationen zumindest über Betriebsparameter der Bearbeitungsvorrichtung und der Werkstückdicke der jeweiligen Werkstücke hinterlegt sind, und die Steuereinrichtung eingerichtet ist, den Werkstückeinlauf zumindest in Abhängigkeit von den Betriebsparametern der Bearbeitungseinrichtung und der Werkstückdicke zu steuern.

Auf diese Weise kann die elektronische Steuereinrichtung, die wie zuvor beschrieben mit der Fördereinrichtung, der Bearbeitungseinrichtung und dem Werkstückeinlauf in Verbindung steht, die Betriebsparameter bzw. die Werkstückdicke dazu nutzen, den Werkstückeinlauf derart zu steuern, dass die Werkstücklücke zwischen zwei aufeinanderfolgenden Werkstücken minimal wird. In diesem Zusammenhang wird mit dem Begriff "Werkstücklücke" dasjenige Maß bezeichnet, das zwischen einer Hinterkante eines ersten Werkstücks und einer Vorderkante eines darauffolgenden Werkstücks entnommen ist, wobei die Begriffe "Hinter-" bzw. "Vorder-" an die Verfahrrichtung angelehnt sind.

Gemäß einer weiteren Ausführungsform zeichnet sich die Bearbeitungsvorrichtung dadurch aus, dass die Bearbeitungseinrichtung verfahrbar ist, wobei die Bearbeitungseinrichtung bevorzugt als Kantenkappaggregat, Planfräse oder Formfräse ausgebildet ist.

Nachdem die elektronische Steuereinrichtung die Bearbeitungseinrichtung steuert, kann die Steuereinrichtung somit auch die Verfahrbewegung der Bearbeitungseinrichtung einstellen. Mit anderen Worten kann die Position und Verfahrgeschwindigkeit der Bearbeitungseinrichtung in Übereinstimmung mit den Betriebsparametern und/oder der Werkstückdicke geregelt werden. Weiter ist die Bearbeitungseinrichtung gemäß einem Aspekt bevorzugt als Kantenkappaggregat und/oder Formfräsaggregat, als Formfräse oder Planfräse ausgebildet, weshalb eine solche Bearbeitungseinrichtung zum Fräsen von Kanten der angesprochenen Werkstücke dient. Handelt es sich bei dem zu bearbeitenden Werkstück um ein plattenförmiges Werkstück, so ist mit der Kante ein Randbereich des Werkstücks gemeint.

Weiter ist es bevorzugt vorgesehen, dass die Bearbeitungsvorrichtung in Übereinstimmung mit der Förderung eines Werkstücks verfahrbar ist. Folglich kann die Steuereinrichtung die Bearbeitungsvorrichtung und die Fördereinrichtung aufeinander abstimmen.

Weiter ist es bevorzugt vorgesehen, dass die Bearbeitungseinrichtung während der Bearbeitung in einer zur Förderrichtung des Werkstücks schrägen Richtung geführt wird. Auf diese Weise ist es möglich, das Werkstück zu fördern, und gleichzeitig mit der Bearbeitungseinrichtung zu bearbeiten. Durch diese Maßnahme kann der Durchsatz der Bearbeitungsvorrichtung deutlich erhöht werden.

Gemäß einer Ausführungsform ist die Bearbeitungsvorrichtung **dadurch gekennzeichnet, dass** die Bearbeitungseinrichtung(en) pneumatisch verfahren wird (werden). Neben dieser preisgünstigen Variante ist es auch möglich, die Bearbeitungseinrichtungen hydraulisch oder mit Hilfe eines Servomotors zu verfahren. Ebenso denkbar sind Linearmotoren.

Gemäß einer weiteren Ausführungsform ist der Werkstückeinlauf mit einer Signalvorrichtung, vorzugsweise einer optischen oder auch akustischen Signalvorrichtung, zur Bestätigung einer Freigabe des Werkstückeinlaufs versehen. Die Signalvorrichtung dient somit dazu, dem Bedienpersonal, das die Bearbeitungsvorrichtung beschickt, darauf hinzuweisen, **dass** ein neues Werkstück zugeführt werden kann. Die optische Vorrichtung kann beispielsweise als Ampel ausgeführt sein.

Weiter kann der Werkstückeinlauf alternativ oder zusätzlich zur Signalvorrichtung eine mechanische Sperre zur Freigabe des Werkstückeinlaufs aufweisen. Die mechanische Sperre ist somit für sowohl manuelle als auch automatische Beschickung geeignet. Erst wenn die Sperre am Werkstückeinlauf diesen freigibt, kann ein Werkstück zur Fördereinrichtung gelangen, und anschließend mit der Bearbeitungseinrichtung bearbeitet werden. Somit ist der Werkstückeinlauf das Element, mit welchem die Werkstücklücke gesteuert werden kann.

Anstelle physischer Vorrichtungen zur Bestätigung der Freigabe oder zur Freigabe des Werkstückeinlaufs, kann auch ein Signal bereitgestellt werden, um eine weitere Maschine wie eine Beschickungsvorrichtung anzusteuern.

In der Steuereinrichtung sind, wie zuvor angesprochen, Betriebsparameter der Bearbeitungsvorrichtung hinterlegt. Diese Betriebsparameter sind aus der folgenden Gruppe ausgewählt: der Vorschubgeschwindigkeit, der minimalen Werkstücklücke, der minimalen Rüstlücke, der Temperatur, der Luftfeuchtigkeit, der Verfahrgeschwindigkeit bzw. der Verfahrzeit, dem Zerspanvolumen, der Kantendicke und der Werkstückdicke. Die Kantendicke ist insbesondere beim Bündigfräsen relevant, die Werkstückdicke beim Planfräse. Die Steuereinrichtung entscheidet, basierend auf zumindest einem der Werte, wie der Werkstückeinlauf in Abhängigkeit von diesem Betriebsparameter und/oder der Werkstückdicke zu steuern ist.

Weiter weist die Bearbeitungsvorrichtung zumindest eine Messeinrichtung auf, um einen oder mehrere der im letzten Absatz erwähnten Betriebsparameter zu erfassen und diese in der Steuereinrichtung zu hinterlegen. Beispiele für eine solche Messeinrichtung sind ein Geschwindigkeitssensor, eine Lichtschranke, ein Temperaturfühler oder ein Hygrometer. Mit den letzten beiden können Informationen über die Umgebungsbedingungen ermittelt werden, und der Betrieb der Bearbeitungsvorrichtung speziell auf diese abgestimmt werden. So beeinflussen nicht nur Parameter der Bearbeitungseinrichtung selbst die Steuerung des Werkstückeinlaufs, sondern auch Parameter der Umgebung unabhängig von der Bearbeitungsvorrichtung. So nehmen Temperatur und Luftfeuchtigkeit Einfluss auf den Betrieb einzelner Aggregate wie dem Werkstückeinlauf. Dies gilt beispielsweise bei Verwendung eines pneumatischen Antriebs. All diese Betriebsparameter mittels Messeinrichtungen zu erfassen und somit optimale Betriebsbedingungen für den Werkstückeinlauf zu bestimmen, kann mit dieser bevorzugten Ausführungsform erreicht werden.

Weiter ist Gegenstand der vorliegenden Erfindung ein Verfahren zum Steuern der Beschickung einer Bearbeitungsvorrichtung, wobei das Verfahren die folgenden Schritte aufweist: Bestimmen der Betriebsparameter der Bearbeitungseinrichtung und der Werkstückdicke der jeweiligen Werkstücke, und Steuern eines Werkstückeinlaufs zumindest in Abhängigkeit der bestimmten Betriebsparameter und der Werkstückdicke. Mit einem solchen Verfahren können die gleichen Vorteile wie die zur Vorrichtung bereits beschriebenen erreicht werden.

In einer weiteren Ausführungsform des angesprochenen Verfahrens werden die Betriebsparameter mittels einer Messeinrichtung erfasst, wobei die Betriebsparameter der Bearbeitungseinrichtung aus der Gruppe der Vorschubgeschwindigkeit, der minimalen Werkstücklücke, der minimalen Rüstlücke, der Temperatur, der Luftfeuchtigkeit, der Verfahrgeschwindigkeit bzw. der Verfahrzeit ausgebildet sind.

### Kurze Beschreibung der Zeichnungen

Nachfolgend wird die vorliegende Erfindung anhand einer beispielhaften Ausführungsform detailliert beschrieben.

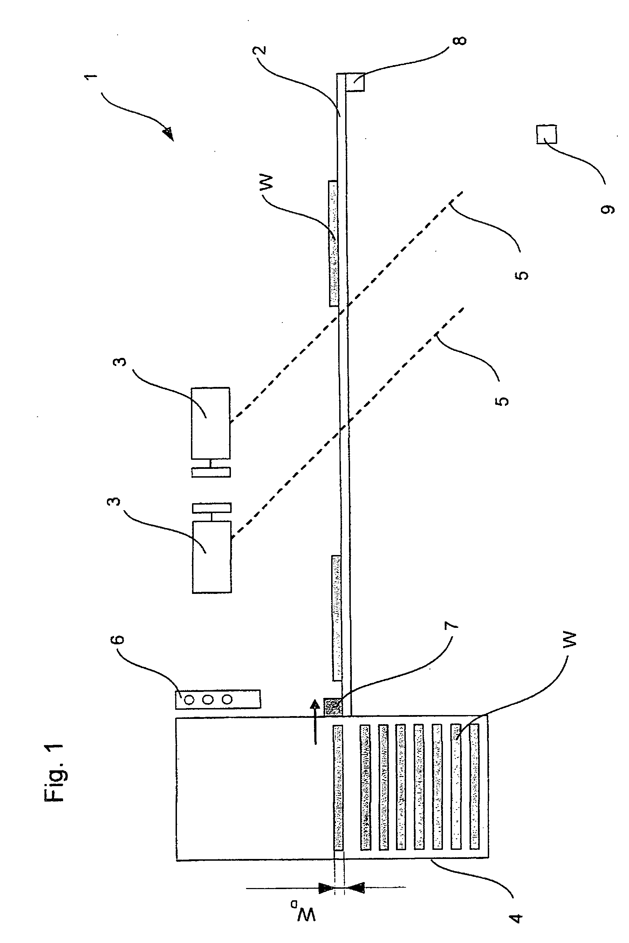

- Fig. 1: zeigt eine schematische Seitenansicht einer Kantenbearbeitungsvorrichtung als Beispiel einer Bearbeitungsvorrichtung gemäß der vorliegenden Erfindung.

### Detaillierte Beschreibung der bevorzugten Ausführungsform

Die nachfolgende Beschreibung einer bevorzugten Ausführungsform der vorliegenden Erfindung ist beispielhaft für die Erfindung zu verstehen. Beispielhaft ist als Bearbeitungsmaschine eine Kantenbearbeitungsvorrichtung 1 gezeigt. Es sei jedoch betont, dass auch andere Bearbeitungsmaschinen Teil der Erfindung sind. Entsprechend können Durchlaufmaschinen mit verschiedensten Bearbeitungsaggregaten versehen werden, um Werkstücke im Durchlauf zu bearbeiten. Die Bearbeitung findet bei der Kantenbearbeitungsvorrichtung 1 in erster Linie im Bereich der Werkstückkanten statt, jedoch kann eine solche Vorrichtung ein Werkstück auch in anderen Bereichen bearbeiten. Als mögliche Bearbeitungsverfahren umfasst die vorliegende Erfindung spanende wie nicht-spanende Verfahren, beispielsweise also Fräs-, Säge-, Bohr-, Schleifbearbeitung, Auftragen von Beschichtungen, oder Polieren.

Die gezeigte Kantenbearbeitungsvorrichtung 1 ist auf für diese Erfindung wesentliche Merkmale hin vereinfacht, und kann beispielsweise neben den gezeigten Kappaggregaten 3 auch weitere Bearbeitungsaggregate aufweisen. Die zu bearbeitenden Werkstücke sind hier plattenförmige Holzwerkstücke. Wie eingangs erwähnt können mit einer erfindungsgemäßen Bearbeitungsmaschine aber auch andere Werkstücke bearbeitet werden, die zumindest abschnittsweise aus Holz, Holzwerkstoffen, Kunststoff, Metall oder einer Kombination hiervon bestehen.

Demnach zeigt Figur 1 eine Kantenbearbeitungsvorrichtung 1, die bevorzugt im Bereich der Holzverarbeitungsindustrie verwendet wird. Die Kantenbearbeitungsvorrichtung 1 weist einen Werkstückeinlauf 4 auf, der gleichzeitig zur Beschickung der bevorzugt plattenförmigen Werkstücke W geeignet ist. Weiter weist die Kantenbearbeitungsvorrichtung 1 eine Fördereinrichtung 2 auf, aus der die Werkstücke W in einer translatorischen Richtung gefördert werden. Am Werkstückeinlauf 4 ist eine mechanische Sperre 7 vorgesehen, mit der die Zuführung eines Werkstücks W gesteuert werden kann. Mit anderen Worten gibt die mechanische Sperre 7 den Werkstückeinlauf 4 frei, sobald eine nicht gezeigte Steuereinrichtung bestimmt, dass ein nächstes Werkstück zur Fördereinrichtung 2 zugeführt werden kann.

Weiter ist im Bereich des Werkstückeinlaufs 4 eine optische Vorrichtung 6, hier eine Ampel, angebracht. Die Ampel 6 ist ebenso mit der Steuereinrichtung verbunden, und gibt ein positives Signal, wenn ein nächstes Werkstück zugeführt werden kann. So kann die gezeigte Kantenbearbeitungsvorrichtung 1, wie hier gezeigt, sowohl die Ampel 6 als auch die mechanische Sperre 7 aufweisen; alternativ ist es auch möglich, dass die Kantenbearbeitungsvorrichtung 1 mit lediglich einem dieser Elemente versehen ist, um die Zuführung eines Werkstücks zu steuern.

Entlang der Fördereinrichtung 2 sind hier zwei Kappaggregate 3 dargestellt, wobei ein Kappaggregat 3 zur Bearbeitung einer Vorderkante eines Werkstücks W, und das weitere Kappaggregat 3 zur Bearbeitung einer Hinterkante eines Werkstücks W geeignet ist. In Figur 1 sind die Kappaggregate mittels eines Motorkörpers und einer Schneide symbolisiert.

Beide Kappaggregate 3 sind jeweils entlang einer Schiene 5 verfahrbar. Jede der Schienen 5 ist bezüglich der Verfahrrichtung (der Erstreckungsrichtung der Fördereinrichtung 2) schräg angeordnet. Somit kann ein Werkstück W mittels der Fördereinrichtung 2 gefördert, und gleichzeitig mittels einem der Kappaggregate 3 an der jeweiligen Kante des Werkstücks W bearbeitet werden.

Im Bereich der Kantenbearbeitungsvorrichtung, oder auch in dieser integriert, sind verschiedene Messeinrichtungen 8, 9 vorgesehen. Insgesamt kann die Kantenbearbeitungsvorrichtung 1 eine Vielzahl solcher Messeinrichtungen 8, 9 aufweisen. In Figur 1 sind beispielhaft zwei Messeinrichtungen gezeigt, nämlich ein Geschwindigkeitsmesser 8 zur Erfassung der Fördergeschwindigkeit, und ein Thermo-Hygrometer 9 zur Erfassung der Temperatur und Luftfeuchtigkeit.

Die erfassten Daten werden zur nicht gezeigten Steuereinrichtung geliefert. Ebenso werden Informationen zum jeweiligen zu bearbeitenden Werkstück W in der Steuereinrichtung hinterlegt, wobei an dieser Stelle explizit die Werkstückdicke W_{d} gemeint ist.

Die Steuereinrichtung kann mit diesen Daten die optische Vorrichtung 6 und/oder die mechanische Sperre 7 steuern, um ein neues Werkstück zuzuführen. Die Entscheidung über die Zuführung eines neuen Werkstücks W wird basierend auf den Betriebsparametern der Kantenbearbeitungsvorrichtung 1, unter anderem der Betriebsparameter der Kappaggregate 3, und der Werkstückdicke W_{d} des jeweiligen Werkstücks W bestimmt.

Beispielhaft seien nun zwei Aspekte der vorliegenden Erfindung angesprochen, mit denen sich die Anwendbarkeit der vorliegenden Erfindung im Betrieb der Kantenbearbeitungsvorrichtung 1 veranschaulichen lässt. Wird ein Werkstück in die Kantenbearbeitungsvorrichtung 1 beschickt, so wird vor dem Weg in der Förderung entlang der Fördereinrichtung 2 die Werkstückdicke W_{d} ermittelt. Bewegt sich nämlich ein Werkstück W entlang der Fördereinrichtung 2, und wird ein Kappaggregat 3 zugestellt, um entweder die Vorder- oder die Hinterkante des Werkstücks zu bearbeiten, so hängt die Dauer der Bearbeitung mit dem jeweiligen Kappaggregat 3 mit der Werkstückdicke W_{d} zusammen. Explizit benötigt ein Kappaggregat 3 eine längere Zeit bei einem dickeren Werkstück, um von einem Ende der Schiene 5 zum anderen Ende der Schiene 5 geführt zu werden (in Figur 1 von links oben nach rechts unten). Nachdem die Kappaggregate 3 nach Ende der Bearbeitung eines ersten Werkstücks wieder in ihre Ausgangsposition zurückgeführt werden müssen (siehe Figur 1), muss eine Werkstücklücke zwischen einem ersten und einem nachfolgenden Werkstück im Falle eines dickeren ersten Werkstücks größer eingestellt werden.

Ein zweiter Aspekt ist die Umgebungstemperatur. Die Kappaggregate 3 werden in dieser Ausführungsform pneumatisch bewegt. Dies bringt jedoch mit sich, dass sich bei geänderter Umgebungstemperatur auch die Verfahrzeit der Kappaggregate ändert. Nachdem die Werkstücklücke bzw. die Zuführung der Werkstücke W zu Beginn der Bearbeitung eingestellt wurde, wird eine eventuell schnellere Verfahrzeit nicht berücksichtigt. Durch eine schnellere Verfahrzeit der Kappaggregate 3 könnte jedoch die Werkstücklücke kleiner eingestellt werden. Durch Beachtung dieses Parameters bei der Einstellung des Werkstückeinlaufs kann die Werkstücklücke somit optimal den aktuellen Bedingungen angepasst werden, weshalb durch diese Maßnahme der Durchsatz der Kantenbearbeitungsvorrichtung 1 erhöht wird.

## Patentansprüche

1. Bearbeitungsvorrichtung (1) zum Bearbeiten von Werkstücken (W), die bevorzugt zumindest abschnittsweise aus Holz, Holzwerkstoffen, Kunststoff, Metall oder dergleichen bestehen, insbesondere im Bereich einer Kante, umfassend:
eine Fördereinrichtung (2) zum Fördern der Werkstücke in einer Durchlaufrichtung,
eine Bearbeitungseinrichtung (3) zum Bearbeiten der Werkstücke (W) zumindest im Bereich einer Kante (Wₖ),
einen Werkstückeinlauf (4), der an einem stromaufwärts gelegenen Ende der Fördereinrichtung (2) angeordnet ist und das Zuführen der Werkstücke (W) zur Fördereinrichtung (2) steuert, und
eine elektronische Steuereinrichtung, die betrieblich mit der Fördereinrichtung (2), der Bearbeitungseinrichtung (3) und dem Werkstückeinlauf (4) in Verbindung steht, um deren Betrieb zu steuern,
**dadurch gekennzeichnet, dass**
in der Steuereinrichtung Informationen zumindest über Betriebsparameter der Kantenbearbeitungsvorrichtung (1), bevorzugt unter anderen Betriebsparametern der Bearbeitungseinrichtung (3), und die Werkstückdicke (W_{d}) der jeweiligen Werkstücke (W) hinterlegt sind, und
die Steuereinrichtung eingerichtet ist, den Werkstückeinlauf (4) zumindest in Abhängigkeit von Betriebsparametern der Kantenbearbeitungsvorrichtung (1) und der Werkstückdicke (W_{d}) zu steuern,
wobei die Betriebsparameter der Bearbeitungsvorrichtung (1) ferner aus der Gruppe der Vorschubgeschwindigkeit, der minimalen Werkstücklücke, der minimalen Rüstlücke, der Temperatur, der Luftfeuchtigkeit, der Verfahrgeschwindigkeit bzw. der Verfahrzeit, dem Zerspanvolumen, der Kantendicke und der Werkstückdicke ausgewählt sind, und
die Bearbeitungsvorrichtung (1) zumindest eine Messeinrichtung (8, 9) zum Erfassen eines Betriebsparameters umfasst.

2. Bearbeitungsvorrichtung (1) gemäß Anspruch 1, **dadurch gekennzeichnet, dass** die Bearbeitungseinrichtung (3) verfahrbar, und bevorzugt als Kantenkappaggregat und/oder Formfräsaggregat, als Formfräse oder Planfräse ausgebildet ist.

3. Bearbeitungsvorrichtung (1) gemäß Anspruch 1 oder 2, **dadurch gekennzeichnet, dass** die Bearbeitungseinrichtung (3) in Übereinstimmung mit der Förderung eines Werkstücks (W) verfahrbar ist.

4. Bearbeitungsvorrichtung (1) gemäß einem der vorangegangenen Ansprüche, **dadurch gekennzeichnet, dass** die Bearbeitungseinrichtung (3) während der Bearbeitung in einer zur Förderrichtung des Werkstücks (W) schrägen Richtung geführt wird.

5. Bearbeitungsvorrichtung (1) gemäß einem der vorangegangenen Ansprüche, **dadurch gekennzeichnet, dass** die Bearbeitungsvorrichtung pneumatisch, hydraulisch oder mit einem Servoantrieb verfahren wird.

6. Bearbeitungsvorrichtung (1) gemäß einem der vorangegangenen Ansprüche, bei welcher der Werkstückeinlauf (4) mit einer Signalvorrichtung (6), vorzugsweise einer optischen oder akustischen Signalvorrichtung, zur Bestätigung einer Freigabe des Werkstückeinlaufs (4) versehen ist.

7. Bearbeitungsvorrichtung (1) gemäß einem der vorangegangenen Ansprüche, bei welcher der Werkstückeinlauf (4) mit einer mechanischen Sperre (7) zur Freigabe des Werkstückeinlaufs (4) versehen ist.

8. Verfahren zum Steuern der Beschickung einer Bearbeitungsvorrichtung (1) gemäß einem der vorangegangenen Ansprüche, wobei das Verfahren aufweist:
Bestimmen der Betriebsparameter der Kantenbearbeitungsvorrichtung (1), bevorzugt unter anderem Betriebsparametern der Bearbeitungseinrichtung (3), und der Werkstückdicke (W_{d}) der jeweiligen Werkstücke, und
Steuern eines Werkstückeinlaufs (4) zumindest in Abhängigkeit der bestimmten Betriebsparameter und der Werkstückdicke (W_{d}),
wobei die Betriebsparameter der Bearbeitungsvorrichtung (1) ferner aus der Gruppe der Vorschubgeschwindigkeit, der minimalen Werkstücklücke, der minimalen Rüstlücke,
der Temperatur, der Luftfeuchtigkeit, der Verfahrgeschwindigkeit bzw. der Verfahrzeit, dem Zerspanvolumen, der Kantendicke und der Werkstückdicke ausgewählt sind, und
die Bearbeitungsvorrichtung (1) zumindest eine Messeinrichtung (8, 9) zum Erfassen eines Betriebsparameters umfasst.

9. Verfahren gemäß Anspruch 8, **dadurch gekennzeichnet, dass** die Betriebsparameter mittels einer Messeinrichtung (8, 9) erfasst werden, wobei die Betriebsparameter der Bearbeitungseinrichtung aus der Gruppe der Vorschubgeschwindigkeit, der minimalen Werkstücklücke, der minimalen Rüstlücke, der Temperatur, der Luftfeuchtigkeit, der Verfahrgeschwindigkeit bzw. der Verfahrzeit, dem Zerspanvolumen, der Kantendicke und der Werkstückdicke ausgewählt sind.

## Claims

1. Machining device (1) for machining workpieces (W) which preferably consist at least in some sections of wood, derived timber products, plastic, metal or the like, in particular in the region of one edge, comprising:
a conveying device (2) for conveying the workpieces in one passage direction,
a machining device (3) for machining the workpieces (W) at least in the region of one edge (Wₖ),
a workpiece feed (4) which is arranged on one end of the conveying device (2) placed upstream and controls feeding of the workpieces (W) to the conveying device (2), and
an electronic control device which is operatively connected to the conveying device (2), the machining device (3) and the workpiece feed (4) to control operation thereof,
**characterised in that**
information at least about operating parameters of the edge-machining device (1), preferably among other operating parameters of the machining device (3), and the workpiece thickness (W_{d}) of the particular workpieces (W) are filed in the control device, and the control device is equipped to control the workpiece feed (4) at least as a function of operating parameters of the edge-machining device (1) and workpiece thickness (W_{d}),
wherein the operating parameters of the machining device (1) are furthermore selected from the group comprising rate of advance, minimum workpiece gap, minimum assembly gap, temperature, air moisture, path feed rate or travel time, machining volume, edge thickness and workpiece thickness, and
the machining device (1) comprises at least one measuring device (8, 9) for recording an operating parameter.

2. Machining device (1) according to claim 1, **characterised in that** the machining device (3) can be moved, and is preferably designed as an edge-severing unit and/or profile-cutting unit, as a profile cutter or face cutter.

3. Machining device (1) according to claim 1 or 2, **characterised in that** the machining device (3) can be moved in accordance with conveying of a workpiece (W).

4. Machining device (1) according to one of the preceding claims, **characterised in that** the machining device (3) is guided in a direction at an angle to the conveying direction of the workpiece (W) during machining.

5. Machining device (1) according to one of the preceding claims, **characterised in that** the machining device is moved pneumatically, hydraulically or using a servo drive.

6. Machining device (1) according to one of the preceding claims, in which the workpiece feed (4) is provided with a signal device (6), preferably an optical or acoustic signal device, to confirm release of the workpiece feed (4).

7. Machining device (1) according to one of the preceding claims, in which the workpiece feed (4) is provided with a mechanical barrier (7) for release of the workpiece feed (4).

8. Method for controlling loading of a machining device (1) according to one of the preceding claims, wherein the method has:
determination of the operating parameters of the edge-machining device (1), preferably among other operating parameters of the machining device (3), and workpiece thickness (W_{d}) of the particular workpieces, and
controlling a workpiece feed (4) at least as a function of the operating parameters determined and workpiece thickness (W_{d}),
wherein the operating parameters of the machining device (1) are furthermore selected from the group comprising rate of advance, minimum workpiece gap, minimum assembly gap, temperature, air moisture, path feed rate or travel time, machining volume, edge thickness and workpiece thickness, and
the machining device (1) comprises at least one measuring device (8, 9) for recording an operating parameter.

9. Method according to claim 8, **characterised in that** the operating parameters are recorded by means of a measuring device (8, 9), wherein the operating parameters of the machining device are selected from the group comprising rate of advance, minimum workpiece gap, minimum assembly gap, temperature, air moisture, path feed rate or travel time, machining volume, edge thickness and workpiece thickness.

## Revendications

1. Dispositif de traitement (1) pour le traitement de pièces à usiner (W), qui, de préférence, consistent, au moins par sections, en bois, matériaux ligneux, matière synthétique, métal ou en matériaux analogues, en particulier dans la région d'un bord, lequel dispositif comprend :
- un système de transport (2) pour transporter, dans la direction de passage, les pièces à usiner,
- un système de traitement (3) pour traiter les pièces à usiner (W) au moins dans la région d'un bord (Wₖ),
- un système d'admission des pièces à usiner (4), qui est disposé à une extrémité du système de transport (2), située en amont, et qui commande l'alimentation du système de transport (2) en pièces à usiner (W), et
- un système de commande électronique, qui est en relation opérationnelle avec le système de transport (2), le système de traitement (3) et le système d'admission de pièce à usiner (4), afin de commander leur fonctionnement,
**caractérisé en ce que**,
dans le système de commande sont enregistrées des informations, qui se rapportent au moins à des paramètres de fonctionnement du dispositif de traitement (1), de préférence, entre autres, des paramètres de fonctionnement du système de traitement (3), et l'épaisseur de pièce (W_{d}) de chaque pièce à usiner (W),
et que le système de commande est aménagé pour commander le système d'admission de pièces à usiner (4), au moins en fonction de paramètres de fonctionnement du dispositif de traitement de bord (1) et de l'épaisseur de la pièce (W_{d}),
sachant que les paramètres de fonctionnement du dispositif de traitement (1) sont, en outre, choisis dans le groupe comprenant la vitesse d'avance, l'intervalle minimale des pièces, la température, l'humidité de l'air, la vitesse du déroulement du processus ou, respectivement, le temps de déplacement, le volume de copeaux, l'épaisseur du bord et l'épaisseur de la pièce à usiner, et
que le dispositif de traitement (1) comprend au moins un système de mesure (8, 9) pour la saisie des paramètres de fonctionnement.

2. Dispositif de traitement (1) selon la revendication 1, **caractérisé en ce que** le système de traitement (3) peut être déplacé et est réalisé, de préférence, en tant qu'ensemble d'ébarbage et / ou de profilage des bords, sous la forme d'une fraiseuse à profiler ou d'une fraiseuse-dresseuse.

3. Dispositif de traitement (1) selon la revendication 1 ou 2, **caractérisé en ce que** le système de traitement (3) peut être déplacé en concordance avec le dispositif de transport d'une pièce à usiner (W).

4. Dispositif de traitement (1) selon l'une des revendications précédentes, **caractérisé en ce que** le système de traitement (3) est guidé dans une direction, qui est orientée obliquement par rapport à la direction de transport de la pièce à usiner (W).

5. Dispositif de traitement (1) selon l'une des revendications précédentes, **caractérisé en ce que** le dispositif de traitement peut être déplacé au moyen d'une commande pneumatique, hydraulique ou d'une servocommande.

6. Dispositif de traitement (1) selon l'une des revendications précédentes, dans lequel le système d'admission de pièce à usiner (4) est pourvu d'un dispositif de signalisation (6), de préférence d'un dispositif de signalisation optique ou acoustique, pour l'actionnement du dégagement de l'ouverture d'admission d'une pièce à usiner (4).

7. Dispositif de traitement (1) selon l'une des revendications précédentes, dans lequel l'ouverture d'admission de pièces à usiner (4) est pourvue d'un organe mécanique de blocage (7) pour le dégagement de l'ouverture d'admission de la pièce à usiner (4).

8. Procédé de commande de l'alimentation d'un dispositif de traitement (1) selon l'une des revendications précédentes, sachant que ledit procédé comprend :
- la détermination des paramètres de fonctionnement du dispositif de traitement (1), de préférence, entre autres, des paramètres de fonctionnement du système de traitement (3) et de l'épaisseur de pièce (W_{d}) de chaque pièce à usiner, et
- la commande d'un système d'admission de pièces à usiner (4), au moins en fonction des paramètres de fonctionnement déterminés et de l'épaisseur de la pièce (W_{d}), sachant que les paramètres de fonctionnement du dispositif de traitement (1) sont, en outre, choisis dans le groupe comprenant la vitesse d'avance, l'intervalle minimal des pièces, la température, l'humidité de l'air, la vitesse de déroulement du processus ou, respectivement, le temps de déplacement, le volume de copeaux, l'épaisseur du bord et l'épaisseur de la pièce à usiner, et
que le dispositif de traitement (1) comprend au moins un système de mesure (8, 9) pour la saisie des paramètres de fonctionnement.

9. Procédé de commande selon la revendication 8, **caractérisé en ce que** les paramètres de fonctionnement sont saisis au moyen d'un système de mesure (8, 9), sachant que les paramètres de fonctionnement du dispositif de traitement sont, en outre, choisis dans le groupe comprenant la vitesse d'avance, l'intervalle minimal des pièces, la température, l'humidité de l'air, la vitesse de déroulement du processus ou, respectivement, le temps de déplacement, le volume de copeaux, l'épaisseur du bord et l'épaisseur de la pièce à usiner.
